# FASCICULE DE BREVET EUROPEEN

(11) **EP 1 631 718 B1**
(45) Date de publication et mention de la délivrance du brevet: **02.01.2013**
(21) Numéro de dépôt: 04767196.1
(22) Date de dépôt: 27.05.2004
(51) Int. Cl.: D21H 19/54, D21H 17/28

(54) **COMPOSITION A BASE D'AMIDON MODIFIE, ISSU DE LEGUMINEUSES, DESTINEE A L'ENNOBLISSEMENT DU PAPIER**
MASSE AUF BASIS EINER MODIFIZIERTEN LEGUMINÖSEN STÄRKE ZUR PAPIERVEREDLUNG
MODIFIED LEGUME STARCH-BASED COMPOUND FOR PAPER FINISHING

(30) Priorité: 06.06.2003 FR 0306899
(43) Date de publication de la demande: 08.03.2006
(73) Titulaire: Roquette Frères, 62136 Lestrem (FR)
(72) Inventeur: CLABAUX, Pierre-Philippe, F-62920 Gonnehem (FR)
(74) Mandataire: Cabinet Plasseraud
(86) Numéro de dépôt international: PCT/FR2004/001319
(87) Numéro de publication internationale: WO 2005/003456

(56) Documents cités:
- EP-A- 1 103 565
- EP-A- 1 184 413
- EP-A1- 0 902 037
- WO-A-88/08757
- WO-A-97/10385
- WO-A-02/074814
- DE-A- 10 049 665
- GB-A- 1 420 392
- RATNAYAKE WAJIRA S ET AL: "Pea starch: Composition, structure and properties: A review", STARKE - STARCH, WILEY-VCH VERLAG, WEINHEIM, DE LNKD- DOI:_, vol. 54, no. 6, 1 June 2002 (2002-06-01), pages 217-234, XP002547247, ISSN: 0038-9056
- R. Stute: "Eigenschaften und Anwendungsmöglichkeiten von Erbsenstärken Teil 1 : Eigenschaften", starch/stärke, vol. 42, no. 5, 1 January 1990 (1990-01-01), pages 178-184, XP55022220,
- "Marktchancen der Markerbsenstärke" In: "Schriftenreihe "Nachwachsende Rohstoffe"", 1997, Landwirtschaftsverlag GmbH, 48165 Münster (DE) vol. 9, pages 86-87,
- GERARD C ET AL: "Amylose determination in genetically modified starches", CARBOHYDRATE POLYMERS, APPLIED SCIENCE PUBLISHERS, LTD. BARKING, GB, vol. 44, no. 1, 1 January 2001 (2001-01-01), pages 19-27, XP004217433, ISSN: 0144-8617, DOI: 10.1016/S0144-8617(00)00194-6

## Description

La présente invention a pour objet une nouvelle composition à base d'amidon modifié, issu de légumineuses.

Elle vise son utilisation dans l'industrie papetière, à des fins d'ennoblissement du papier ou du carton plat, en particulier par surfaçage, surfaçage pigmenté et / ou par couchage.

Elle concerne encore le procédé d'ennoblissement du papier ou du carton plat, en particulier par surfaçage, surfaçage pigmenté et / ou couchage mettant en oeuvre au moins une composition selon l'invention.

Elle concerne aussi le papier ou le carton plat obtenu par mise en oeuvre d'au moins une composition selon l'invention.

Elle concerne enfin l'utilisation d'un amidon modifié, issu de légumineuses pour l'ennoblissement d'un papier ou d'un carton plat, en particulier par surfaçage, surfaçage pigmenté et / ou couchage.

Par « légumineuses » au sens de la présente invention, on entend plus particulièrement la famille des papilionacées, dont les représentants les plus importants sont le haricot, le pois, la lentille, la fève, la luzerne, le trèfle, le lupin.

Par « amidon de légumineuses », au sens de l'invention, on entend tout amidon extrait de légumineuses, notamment du pois, présentant une richesse en amidon supérieure à 95% (sec/sec), assortie d'une teneur faible en matières colloïdales et en résidus fibreux, notamment inférieure à 1% (sec/sec).

La richesse en amidon est de préférence supérieure à 98% (sec/sec).

La teneur en protéines est faible, soit inférieure à 1%, préférentiellement inférieure à 0,5% et, plus particulièrement, comprise entre 0,1 et 0,35% (sec/sec).

Les traitements d'ennoblissement du papier ou du carton plat, qu'il s'agisse de surfaçage, de surfaçage pigmenté ou de couchage ne peuvent pas se satisfaire, généralement, de l'utilisation d'amidons natifs, pour des raisons connues de l'homme de l'art, telles que rhéologiques, énergétiques, économiques ou plus techniques et liées à la mise en oeuvre, à la marche de la machine, de fabrication du papier équipée d'une presse encolleuse (« Size-press ») ou coucheuse spécifique, et / ou aux performances présentées par le papier ou carton plat obtenus.

Il est ainsi impératif de procéder à au moins une opération choisie parmi les opérations d'hydrolyse, de transformations chimique et physiques, mécaniques, thermomécaniques et thermiques, pour rendre l'amidon apte à participer à l'élaboration d'une formulation de surfaçage, de surfaçage pigmenté ou de couchage.

Une opération d'hydrolyse, visant très directement la réduction de la masse moléculaire et, dans la plupart des cas, la réduction de la viscosité, peut être menée par divers moyens tels que chimiques, couramment par l'action d'un acide, d'une base ou d'un agent oxydant ou par une action enzymatique, le plus couramment par α-amylase.

Les modifications chimiques courantes sont de différentes sortes telles que l'oxydation, notamment à l'hypochlorite, l'estérification, comme l'acétylation, l'éthérification, par exemple, par cationisation, carboxyméthylation ou hydroxypropylation.

Les traitements physiques peuvent être pratiqués grâce à des moyens thermomécaniques, par exemple, comme l'extrusion ou la pré-gélatinisation, ou thermiques, comme ceux connus de l'homme de l'art sous le nom de « Hot Moisture Treatment » (HMT) ou d'« Annealing ».

C'est au prix d'au moins l'une de ces transformations que les amidons sont susceptibles de répondre aux contraintes et aux cahiers des charges dans leur ensemble, et de permettre l'accès aux propriétés que l'homme de l'art attend par la pratique d'une opération d'ennoblissement du papier.

Les critères peuvent être de nature strictement économique. En effet, on constate que, si la fourniture en amidons de mais ou de blé ne pose aucun problème crucial à l'heure actuelle, les approvisionnements en fécule de pomme de terre, par contre, deviennent difficiles, notamment de par les coûts d'extraction ainsi que par la réglementation qui lui est appliquée.

L'accès à des amidons, notamment de maïs, hybride qu'ils soient riches en amylose ou en amylopectine, quelquefois peu aisé, n'est pas forcément souhaité de par leur coût généralement plus élevé.

D'autres sources d'amidons peuvent être envisagées telles que le riz ou le manioc. Elles sont encore, le plus souvent, assez peu accessibles et / ou de qualité irrégulière.

Outre l'aspect économique, il en existe de plus techniques, dont la sévérité tend à s'accentuer, notamment avec l'évolution des technologies.

L'un d'eux réside en ce que les exigences, pour la composition d'ennoblissement, en matière de rhéologie, sont de plus en plus élevées, en particulier du fait des cisaillements intenses auxquels la composition est exposée.

En réponse, les fécules de pomme de terre, d'une manière générale, qu'elles soient hydrolysées ou non, modifiées ou non, conduisent à des compositions présentant une cohésion qui est, avec les hauts taux de cisaillement, parfois insuffisante.

Elles peuvent ainsi générer, malgré de bonnes propriétés filmogènes, des inconvénient inacceptables tels que des irrégularités dans la dépose ou des projections sur machine.

La réponse des amidons de céréales à ces mêmes nécessités est toute différente.

En effet, de telles matières, notamment les amidons de mais ou de blé, à l'inverse des amidons de tubercules, conduisent à des compositions présentant une forte cohésion, éventuellement excessive, par laquelle la composition épaissit fortement et évolue vers la solidification, par élévation de l'extrait sec, cet aspect pouvant notamment conduire, sous cisaillement intense, à des phénomènes de nature rhéologique indésirables ou même rédhibitoires tels que, par exemple, de dilatance.

En outre, les conditions de circulation et de recyclage de colle peuvent générer, par absence ou insuffisance de cisaillement et / ou abaissement de la température, des reprises de viscosité importantes ou, pour le moins, une évolution sensible de celle-ci, qui traduisent le passage, au moins partiel, d'un état sol à un état gel (rétrogradation) plus ou moins engagé.

Ainsi, même transformés, les amidons de maïs ou de blé ne présentent pas toujours, selon ces aspects, toutes les garanties nécessaires pour l'homme de l'art.

Aussi, il existe un réel besoin à rechercher d'autres sources d'amidons qui puissent être aisément accessibles et faciles à transformer, notamment dans le cadre de la réduction de la masse moléculaire, notamment par hydrolyse, et des réactions chimiques et / ou physiques possibles.

Au-delà, bien évidemment, la nécessité reste impérative, pour d'éventuelles sources d'amidon, éventuellement fonctionnalisées ou modifiées, d'accéder aux cahiers des charges et aux propriétés attendues telles que :
1. des propriétés rhéologiques adaptées, que ce soit en termes de comportement à la préparation, notamment de compatibilité avec les divers autres ingrédients, au stockage, notamment en fonction du temps et / ou de la température, et à la dépose, notamment dans le cadre de conditions de cisaillement extrêmement variables, souvent exigeantes,
2. les propriétés à la dépose, autres que rhéologiques telles que, par exemple, la rétention d'eau ou le caractère filmogène,
3. les caractéristiques mécaniques du papier, dont les principales sont les résistances à la rupture ou à l'éclatement, la cohésion interne ou encore la rigidité, la rugosité ou le lissé,
4. l'obtention d'un degré satisfaisant de collage de surface du papier, caractérisant son aptitude, notamment, à l'écriture, quand il est associé à un agent de collage,
5. les exigences, très répandues, relatives à la résistance des papiers à l'eau ou à l'humidité,
6. d'autres exigences plus spécifiques telles que la résistance aux graisses et huiles ou la capacité à s'opposer au passage d'un gaz, notamment l'oxygène,
7. des propriétés optiques du papier comme, par exemple, la blancheur, l'opacité ou la brillance,
8. l'aptitude du papier à l'imprimabilité, notamment par jet d'encre.

La Demanderesse a constaté que, comparativement aux diverses sources de matières amylacées constituées par les céréales et les tubercules, celles constituées par les amidons de légumineuses, notamment de pois, peuvent être considérées comme facilement accessibles, dans de bonnes conditions, notamment économiques.

Elle a, en outre, constaté qu'elles sont parfaitement susceptibles de subir l'ensemble des modifications couramment pratiquées sur les amidons de céréales ou de tubercules.

Une opération visant la réduction de la masse moléculaire, notamment par hydrolyse acide, alcaline ou enzymatique, par oxydation, peut être conduite, quel que soit son degré.

Les réactions de nature chimique, par exemple par oxydation, estérification, éthérification et / ou réticulation peuvent être aisément déclinées, notamment en termes de degrés de transformation usuels.

Toute modification physique, selon les modes d'usage courant, notamment évoqués précédemment, peut être envisagée.

Les diverses formes de modification peuvent être associées et cumulées sans inconvénient.

On peut noter la prise en compte de certains de ces aspects relatifs aux amidons de pois modifiés dans quelques documents existants.

C'est le cas dans l'article « Chemical and Enzymatic Modifications of the Pasting Properties of Legume Starches » - Die Stârke 41 (1989) Nr.4, S. 135-140, qui évoque, d'une part, les effets de traitements, alcalin ou acide et, d'autre part, ceux d'hydrolyses enzymatiques par une α-amylase ou une lipase, sur la viscosité.

Un autre article « The Reactivity of Native and Autoclaved Starches from Different Origins Towards Acetylation and Cationization" - Die Stârke 47 (1995) Nr.4, S.135-143, analyse les effets d'un passage en autoclave dans le cadre d'une modification, isolée et sans hydrolyse associée, de l'amidon de pois par l'anhydride acétique ou par un réactif cationique, d'ailleurs, sans autres précisions relatives aux modifications ou aux propriétés à l'application notamment papetière.

En outre, on connaît la demande de brevet EP 1 184 413 qui décrit un procédé de conversion enzymatique de différents types d'amidon, dont le pois. Les compositions ainsi obtenues présentent une bonne stabilité et peuvent être utilisées en papéterie, notamment pour effectuer des opérations de surfaçage/ couchage et d'encollage.

Hors les aspects de transformation, le brevet européen EP 0 620 121 décrit l'utilisation très particulière d'amidon de pois dans les papiers autocopiants sans carbone. ,

Dans le même domaine d'application tout à fait spécifique, les brevets US 3 996 060 et 3 996 061 préfèrent un amidon de pois classifié.

Dans le cadre de ces papiers dits « NCR », sensibles à la pression, l'amidon est utilisé sous forme de granules. Il est éventuellement réticulé pour garantir cet état mais, en tout état de cause, il n'est nul besoin, pour un usage sous la forme granulaire, de faire appel à des amidons modifiés.

D'autres documents encore, comme l'article « Semitechnical Separation of Legume Starches, especially Pea Starch » - Engeneering and Food, Vol.3, Advanced Processes - 5th International Congress - 1989, pp. 41-49, traitent de techniques de séparation de l'amidon natif.

Ce dernier évoque d'ailleurs la possibilité de l'utilisation d'une colle d'un tel amidon natif pour le couchage du papier.

Or, la Société Demanderesse a pu constater que l'usage, pour l'ennoblissement du papier, d'un amidon issu de légumineuses, n'est pas possible à l'état natif, sans aucune transformation et présente, pour le moins, de très graves inconvénients.

Les raisons pour en écarter l'idée sont plus impérieuses que celles conduisant à éviter l'usage des amidons natifs, issus de céréales ou de tubercules.

En effet, il apparaît que, dans ce cas, les teneurs en amylose, plus élevées, conduisent à des difficultés sérieuses de solubilisation à la vapeur et en cuve ouverte, rendant nécessaire l'usage d'un cuiseur de type « Jet-Cooker ».

Malgré ce passage, la colle obtenue est très instable. La rétrogradation est si rapide qu'elle rend très problématique toute tentative de traitement d'enduction de papier, que ce soit par surfaçage, surfaçage pigmenté ou couchage.

Par contre, la Demanderesse a pu vérifier qu'il était tout à fait possible de conduire à bien toute réaction de modification de l'art antérieur sur un amidon de pois.

Elle a en effet pu déterminer que, de manière surprenante et inattendue, l'une quelconque des modifications d'hydrolyse et / ou chimiques usuelles, comme une opération d'hydrolyse acide, alcaline ou enzymatique, une modification par oxydation, par estérification, éthérification ou réticulation, par exemple, pratiquée sur un amidon de légumineuses, notamment de pois, permettait de résoudre les problèmes rédhibitoires de cuisson et de stabilité posés par l'amidon natif correspondant.

Elle a ainsi observé que de telles modifications pouvaient revêtir, de ce fait, un très grand intérêt dans des domaines industriels d'importance.

Notamment, la Demanderesse est ainsi parvenue à une composition utile pour l'ennoblissement d'un papier ou d'un carton plat, notamment par surfaçage, surfaçage pigmenté ou couchage, caractérisée en ce qu'elle continent au moins un amidon modifié, issu de légumineuses.

Elle a constaté en outre que la composition est avantageusement caractérisée en ce qu'elle comprend un amidon de légumineuses, modifié, dont la richesse en amylose est comprise entre 30 et 60%, de préférence, inférieure à 45%.

La composition est caractérisée en ce que l'amidon issu de légumineuses a subi au moins une transformation visant essentiellement la réduction de la masse moléculaire par hydrolyse acide, alcaline et / ou enzymatique, voire par oxydation ou thermo-oxydation et / ou au moins un traitement de stabilisation par modification chimique, notamment par oxydation, estérification, éthérification ou réticulation.

La composition est en outre avantageusement caractérisé en ce que l'amidon issu de légumineuses, modifié chimiquement ou enzymatiquement, a subi, avant ou après la modification chimique, de préférence après celle-ci, une modification physique, thermique et/ ou thermomécanique.

Ladite composition tire encore avantage à être caractérisée en ce que l'amidon de légumineuses, de préférence un amidon de pois, présente une richesse en amidon supérieure à 95% sec / sec, de préférence supérieure à 98% sec / sec.

La composition selon l'invention autorise ainsi la mise en place d'un nouveau procédé d'ennoblissement du papier ou du carton plat, notamment par surfaçage, surfaçage pigmenté et / ou couchage, caractérisé en ce qu'il comprend au moins une étape mettant en oeuvre ladite composition.

Ledit procédé, faisant appel à la composition selon l'invention, conduit à la fabrication d'un papier ou d'un carton plat, caractérisé en ce qu'il est soumis à un procédé d'ennoblissement, notamment par surfaçage, surfaçage pigmenté et / ou couchage.

Une importance toute particulière est attachée à l'utilisation, à ces fins d'ennoblissement, d'un amidon modifié, issu de légumineuses est, à ce titre, à sa présence dans le papier.

Sa richesse en amylose est comprise entre 30 et 60%, pour le traitement d'ennoblissement d'un papier ou d'un carton plat, notamment par surfaçage, surfaçage pigmenté et / ou couchage.

Les moyens exposés, notamment de transformation, en particulier, chimique, permettent de répondre à la plupart des exigences de la technique.

Le comportement des amidons modifiés issus de légumineuses à la préparation de la composition selon l'invention, en particulier, à la dispersion, à la solubilisation, notamment par action de la vapeur vive, en cuve ouverte ou sur cuiseur continu (« Jet-Cooker »), est particulièrement remarquable.

La Demanderesse a pu notamment constater, lors des préparations pratiquées, l'absence totale de tout problème de compatibilité avec les divers autres agents d'usage courant pour l'élaboration d'une composition destinée à l'ennoblissement du papier, notamment par surfaçage, surfaçage pigmenté et / ou couchage.

C'est tout particulièrement le cas pour les agents réputés plastifiants, notamment l'urée, le nitrate de sodium, la glycérine, les polyols comme le sorbitol, les sirops de glucose hydrogénés, les polyéthylènes ou les polypropylèneglycols.

L'adjonction de tels agents est, bien au contraire, souvent souhaitée. Ils permettent, en effet, d'accéder à des compositions selon l'invention, plus stables encore. A ce titre, aussi, de la compatibilité, on peut citer, par exemple, les cas d'association à des azurants optiques ou à des colorants, notamment pour en améliorer l'efficacité et le rendement ou à divers polymères synthétiques, pour le développement de synergies d'intérêt.

La compatibilité est notamment excellente dans le cas d'associations avec divers agents synthétiques d'usage courant dans le domaine visant l'amélioration de la résistance à sec ou de la résistance à l'eau, notamment avec les résines formolées ou les agents synthétiques hydrophobes.

Par ailleurs, la composition selon l'invention, dès lors qu'elle remédie aux inconvénients rédhibitoires posés par des amidons natifs issus de légumineuses, permet d'accéder à des propriétés rhéologiques adaptées.

En particulier, elle est d'un comportement particulièrement remarquable à son mouvement pour sa distribution ou son recyclage, sans prise ni perte de viscosité, à son stockage, notamment pendant des temps jugés longs ou des températures réputées élevées.

En particulier, de ce dernier point de vue, il a été noté que, à l'inverse des amidons de céréales ou de tubercules, notamment ceux présentant une richesse en amylose élevée, les amidons modifiés, issus de légumineuses, pourtant riches, voire très riches en amylose, ne généraient que très peu de formation de complexes amylose / lipides, même dans le cas de stockages longs de la composition à température élevée.

Une conséquence importante réside en ce que la composition selon l'invention peut être recyclée sans précaution particulière, sans qu'elle s'enrichisse en matières insolubles, phénomène particulièrement gênant, notamment dans son exploitation papetière et malheureusement courant avec les amidons de céréales ou de tubercules, même modifiés.

La composition selon l'invention présente en outre une rhéologie adaptée, traduisant notamment une cohésion adéquate, ni trop faible, susceptible de provoquer des projections sur machine, ni trop élevée, ce qui génère des reprises de viscosité.

Il s'en suit un comportement à la dépose remarquable, quel que soit le procédé auquel il est fait appel, en particulier, dans des conditions de vitesse et de cisaillement élevés.

En outre, les propriétés autres que rhéologiques offertes par la composition à la dépose, telles que, par exemple, la rétention d'eau ou la pénétration dans le papier, sont aussi particulièrement remarquables.

Il est ainsi possible de parvenir au respect des caractéristiques d'intérêt conférées au papier, notamment les plus courantes que sont les résistances à la rupture ou à l'éclatement, la cohésion interne ou encore la rigidité, la rugosité ou le lissé.

Il est aussi aisé, dans la plupart des cas, d'accéder à des caractéristiques spécifiques telles que la résistance à l'eau ou à l'humidité, la résistance aux graisses ou aux huiles ou la capacité à s'opposer au passage d'un gaz, notamment l'oxygène.

De même, on a pu observer qu'il était tout à fait possible de remplir les cahiers des charges en termes de propriétés optiques du papier, telles la blancheur, l'opacité ou la brillance du papier, ou d'aptitude du papier à l'impression, notamment par jet d'encre.

De plus, la présence de l'amidon modifié issu de légumineuses utilisé peut être déterminante quand on considère le degré de collage de surface du papier et son caractère hydrophobe, même si l'agent de collage associé demeure le facteur prépondérant.

Pour répondre à l'ensemble des critères, on peut se satisfaire, pour la transformation de l'amidon issu de légumineuses, de sa modification chimique ou de réduction de sa masse moléculaire.

Il est toutefois préféré, de façon générale, de procéder à une double opération de réduction de la masse moléculaire, généralement préalable, et de modification chimique proprement dite.

La réduction sensible de sa masse moléculaire est obtenue par une hydrolyse acide, alcaline et / ou enzymatique, voire par oxydation, envisagée avant ou après la modification chimique, de préférence avant celle-ci. Elle a, pour objectif majeur, une fluidification substantielle de la matière amylacée.

Par « fluidification substantielle », on entend tout traitement apte à conférer à la matière amylacée une viscosité à chaud, qu'il est possible d'apprécier par la mesure de la fluidité dans l'eau (« Water Fluidity » - WF), cette dernière étant au moins égale à 20 environ, de préférence au moins égale à 50, de préférence encore, comprise entre 70 et 90.

En ce qui concerne la modification chimique proprement dite de l'amidon issu de légumineuses, la Société Demanderesse considère que si tous les esters et les éthers utilisés notamment dans l'industrie papetière, comme énoncés par exemple dans « Industrial Uses of Starch and its Derivatives » - J.A. RADLEY 6 Applied Science Publishers - 1976 - 5.3.3, page 210, sont susceptibles de satisfaire l'homme de l'art, il peut être fait appel à une estérification comme celle pratiquée, notamment, avec l'anhydride acétique (« Starch Production Technology » - J.A. RADLEY - Applied Science Publishers - 1976 - Chapter 21).

Des considérations particulières comme, par exemple, l'acquisition d'un caractère hydrophobe, peuvent justifier toutefois le recours à des réactifs tels que, par exemple, les anhydrides octényl ou dodécényl succiniques.

Parmi les éthers, les amidons hydroxypropylés sont souvent jugés d'intérêt, les amidons cationiques bénéficient toutefois d'une attention particulière en raison de leur affinité pour la fibre cellulosique.

Les amidons réticulés, notamment à l'urée-formol ou dans le cadre de la demande de brevet européen EP 1 050 543, présentent l'intérêt double d'une viscosité adaptée et d'une grande stabilité en colle.

Les traitements physiques, notamment thermiques ou thermomécaniques, offrent, la plupart du temps, des moyens complémentaires autorisant l'accès, par exemple, à une meilleure stabilité, à un comportement rhéologique encore amélioré ou à une solubilité dans l'eau, partielle ou totale.

Les travaux menés par la Société Demanderesse l'amènent à préférer les amidons issus de légumineuses d'une richesse en amylose comprise entre 30 et 60%, notamment en considérant la grande stabilité qu'ils présentent en colles, peu sujettes à la rétrogradation.

Les différents aspects relatifs à la composition selon la présente invention dans son utilisation pour l'ennoblissement du papier, notamment par surfaçage, surfaçage pigmenté et / ou couchage, vont être décrits de façon plus détaillée à l'aide des exemples qui ne sont aucunement limitatifs.

### Exemple 1 :

Un échantillon d'amidon de pois, d'une richesse en amylose de 36,7%, est soumis à une fluidification selon le mode décrit dans la demande de brevet européen EP 0 902 037, déposée par la Demanderesse.

On obtient un produit dénommé APF, pour lequel la valeur de fluidité dans l'eau (WF) est égale à 75.

On effectue aussi, sur un autre échantillon du même amidon de pois natif, une double opération de fluidification et d'estérification, en l'occurrence, d'acétylation (indice d'acétyle I.A = 1,8) pour obtenir le produit dénommé APFA, pour lequel la WF est égale à 88.

De façon similaire, un échantillon d'amidon de maïs reçoit un double traitement de fluidification et d'acétylation (AMFA - indice d'acétyle I.A = 1,9). La valeur WF est égale à 78.

De même, sur un autre échantillon, encore, du même amidon de pois natif, on effectue une double opération de fluidification et d'éthérification, ici, cationique (taux d'azote=0,16% - WF=80) conduisant à un produit dénommé APFC.

Parallèlement, on prépare de façon similaire, par fluidification et cationisation d'un amidon de maïs, un produit dénommé AMFC (taux d'azote=0,16% - WF=78).

Un dernier échantillon du même amidon de pois natif subit successivement une fluidification et une réticulation, conformément à la demande de brevet européen EP 1 050 543 (APFR, WF=75).

Les six produits sont ensuite traités, pour leur mise en solution, de la même manière, soit par alimentation d'un lait d'amidon à 30% de matières sèches (30%MS) et passage en continu dans ledit appareil (« Jet-Cooker ») à 145°C pendant 3 minutes.

Les conditions de marche permettent l'obtention de colles à 20% de matières sèches (20%MS) dont on mesure la viscosité Brookfield au refroidissement, à 100 tours par minute.

| | Amidon de mais fluidifié acétylé | Amidon de pois (36,7% d'amylose) | | |
|---|---|---|---|---|
| | | fluidifié | Fluidifié acétylé | Fluidifié réticulé |
| 80°C | 110 | 65 | 48 | 77 |
| 70°C | 13-4 | 80 | 54 | 83 |
| 60°C | 195 | 92 | 66 | 94 |
| 50°C | 221 | 102 | 74 | 103 |
| 40°C | 268 | 121 | 90 | 120 |

On note que, pour des valeurs de fluidité dans l'eau sensiblement voisines, l'amidon de mais modifié présente une viscosité Brookfield largement supérieure à celle des amidons de pois, même seulement fluidifiés.

L'amidon de pois, transformé de la même façon, présente en outre, au refroidissement, une évolution bien moindre, cet aspect étant préservé avec un amidon de pois seulement fluidifié, éventuellement réticulé.

### Exemple 2 :

Des échantillons des différentes colles préparées comme précédemment, à 20%MS, sont évalués en termes de stabilité, ladite évaluation consistant à observer l'apparition et / ou l'augmentation de la quantité de matières insolubles et à la quantifier dans chaque cas, après avoir maintenu lesdits échantillons pendant 24 heures à des températures élevées, soit à 70 ou 90°C.

A l'issue de ce test, on procède ainsi à la détermination des quantités de matières insolubles présentes dans chacune d'elles.

| | Amidon de maïs acétylé fluidifié | Amidon de pois (36,7% d'amylose) | | |
|---|---|---|---|---|
| | | fluidifié | Fluidifié acétylé | Fluidifié réticulé |
| 90°C | | 0,07% | 0,03% | 0,50% |
| 70°C | | 0,06% | 0,04% | 0,50% |

On peut ainsi constater que ces tests permettant d'exprimer et, de ce fait, de prévenir, si besoin est, les désagréments importants à l'utilisation, concernant notamment l'enrichissement des circuits en matières insolubles, sont très favorables à l'amidon de pois, qu'il soit seulement fluidifié ou fluidifié et acétylé, son comportement permettant notamment le stockage des colles à une température élevée.

### Exemple 3 :

On opère, sur différents prélèvements de colles obtenues comme précédemment, à une dilution destinée à les amener à des conditions rhéologiques propres à une opération d'enduction adaptée.

Dans une seconde étape, on sépare chacun desdits prélèvements ainsi dilués en deux parties égales.

L'une conduit à six colles APF1, APFA1, AMFA1, APFC1, AMFC1 et APFR1 utilisées en l'état.

L'autre donne lieu à ajout d'un azurant optique à raison de 20% de produit commercial compté par rapport à l'amidon et apporte six nouveaux échantillons baptisés respectivement APF2, APFA2, AMFA2, APFC2, AMFC2 et APRA2.

On se préoccupe, plus particulièrement, des caractéristiques présentées suivantes :

| Amidon modifié - référence | Matières sèches (% MS) à l'enduction | pH | Viscosité Brookfield à 100 tours / minute et 60°C (mPa.s) |
|---|---|---|---|
| APFA1 | 15 | 5,2 | 31 |
| APFR1 | 14 | 7,1 | 44 |
| APF1 | 15 | 7,0 | 70 |
| AMFA1 | 15 | 5,3 | 95 |
| APFC1 | 15 | 7,1 | 28 |
| AMFC1 | 14 | 7,1 | 48 |
| APFA2 | 15 | 5,5 | 31 |
| APFR2 | 14 | 7,0 | 42 |
| APF2 | 15 | 7,1 | 68 |
| AMFA2 | 15 | 5,5 | 93 |

Le grammage du papier servant de support pour l'enduction est de 90 g/m².

La dépose, de 4 g/m² environ (en matières sèches) pour deux faces, est réalisée à l'aide d'une encolleuse (« Size-Press ») de laboratoire.

On enregistre, sur les différents papiers surfacés obtenus, la capacité de prise d'eau par la mesure dite du « collage Cobb », ainsi que les niveaux de performances atteints selon divers tests, connus de l'homme de l'art, sous les noms de « Scott-Bond » (cohésion interne), « Porosité Bendtsen » (porosité à l'air), « Lissé Bendtsen » ou Rigidité « KODAK ».

| | Cobb (g/m²) | 60 | Porosité Bendtsen (millilitres / minute) | Lissé Bendtsen (millilitres/minute) | |
|---|---|---|---|---|---|
| | CF | CT | | CF | CT |
| Papier non surfacé | 18,6 | 18,7 | 550 | 570 | 488 |
| APF1 | 24,8 | 27,5 | 172 | 740 | 710 |
| APFA1 | 22,5 | 25,1 | 174 | 730 | 680 |
| AMFA1 | 27,1 | 27,5 | 230 | 808 | 667 |
| APFC1 | 24,5 | 26,2 | 260 | 1140 | 1520 |
| AMFC1 | 27,3 | 28,5 | 254 | 690 | 660 |
| APFR1 | 21,3 | 22,4 | 238 | 780 | 640 |
| APF2 | 26,7 | 27,8 | 168 | 780 | 700 |
| APFA2 | 23,9 | 25,4 | 220 | 770 | 820 |
| AMFA2 | 26,3 | 28,0 | 257 | 792 | 608 |
| APFR2 | 23,9 | 24,6 | 260 | 720 | 650 |
| APFC2 | 25,0 | 25,6 | 260 | 870 | 710 |
| AMFC2 | 26,6 | 26,6 | 292 | 660 | 650 |

A traitements de fluidification et d'acétylation similaires, l'amidon de pois permet d'accéder à un papier plus fermé à l'eau (Cobb) et à l'air (porosité) que celui obtenu avec amidon de maïs.

Face au collage Cobb, le produit réticulé ne manque pas non plus d'intérêt.

| | Scott-Bond (J/m²) | Rigidité (mN.m) | |
|---|---|---|---|
| | | SM | ST |
| Papier non surfacé | 223 | 0,42 | 0,16 |
| APF1 | 269 | 0,55 | 0,25 |
| APFA1 | 357 | 0,49 | 0,22 |
| AMFA1 | 216 | 0,50 | 0,23 |
| APFC1 | 233 | 0,48 | 0,22 |
| AMFC1 | 243 | 0,48 | 0,23 |
| APFR1 | 219 | 0,50 | 0,25 |
| APF2 | 238 | 0,51 | 0,27 |
| APFA2 | 222 | 0,53 | 0,23 |
| AMFA2 | 231 | 0,54 | 0,23 |
| APFC2 | 243 | 0,42 | 0,23 |
| AMFC2 | 245 | 0,52 | 0,21 |
| APFR2 | 281 | 0,48 | 0,23 |

On constate, notamment dans la comparaison APFA - AMFA, une augmentation tout à fait sensible de la cohésion interne, augmentation déjà visible sur un amidon de pois seulement fluidifié, améliorations auxquelles l'azurant optique semble nuire.

A l'inverse, l'amidon de pois réticulé se comporte très bien dans ce cas.

De même, ce tableau nous enseigne que, malgré une stabilité de colle moins bonne, il peut être possible de se satisfaire, sur ces bases comparatives, d'un traitement de fluidification de l'amidon de pois pour des caractéristiques tout à fait convenables.

### Exemple 4 :

Des papiers enduits selon les conditions de l'exemple 3 sont soumis à des mesures relatives aux propriétés optiques telles que, notamment, l'opacité et le brillant.

Les valeurs suivantes sont enregistrées :

| | Opacité (%) | | Brillant 75° (%) | |
|---|---|---|---|---|
| | CF | CT | CF | CT |
| Papier non surfacé | 93,9 | 93,5 | 10,1 | 8,7 |
| APF1 | 93,1 | 93,4 | 10,4 | 9,0 |
| APFA1 | 92,4 | 92,9 | 11,3 | 9,1 |
| AMFA1 | 92,3 | 91,7 | 10,7 | 9,1 |
| APFR1 | 93,9 | 93,7 | 11,4 | 8,8 |
| APF2 | 93,9 | 93,0 | 10,4 | 9,0 |
| APFA2 | 93,8 | 93,9 | 11,3 | 8,8 |
| AMFA2 | 91,8 | 92,1 | 10,8 | 8,7 |
| APFR2 | 93,9 | 93,9 | 10,7 | 8,9 |

En termes d'opacité, l'amidon de pois, quelle que soit la modification subie, tend à un comportement meilleur que celui de l'amidon de mais, que ce soit en présence d'azurant optique ou non.

Quant à la mesure du brillant, on ne constate pas de différences significatives.

### Exemple 5 :

Les papiers enduits obtenus à l'exemple 3 sont encore soumis à des appréciations relatives à leur aptitude à l'imprimabilité.

Pour cella, selon une première procédure dite « Noir porométrique », on mesure la densité optique d'une tache d'encre laissée après contact de l'encre avec le papier pendant 120 secondes, toutes conditions étant égales par ailleurs.

Selon une autre procédure, on réalise des copies d'une forme test sur une imprimante Hewlett-Packard HP Deskjet 560 C et l'on s'attache à une appréciation visuelle, comparative, par notation (de 1 à 10) portant essentiellement sur la netteté des traits et la qualité de leur juxtaposition, la clarté des caractères ou les débordements de couleur.

Dans une troisième démarche, ils subissent le test IGT, encre 3808, à 7m.s-¹.

On dresse le bilan suivant :

| | Noir porométrique 120 secondes | | Impression Jet d'encre | | Test IGT Encre 3808.-7 m.s-¹ |
|---|---|---|---|---|---|
| | CF | CT | CF | CT | |
| Papier non surfacé | 1,54 | 1,63 | 5 | 5 | arraché |
| APF1 | 0,94 | 1,06 | 7 | 7 | tenue |
| APFA1 | 0,98 | 1,15 | 8 | 8 | tenue |
| AMFA1 | 0,81 | 1,17 | 8 | 8 | tenue |
| APFC1 | 1,05 | 1,31 | 7 | 8 | tenue |
| AMFC1 | 1,10 | 1,36 | 6 | 7 | CF :3,5o |
| | | | | | CT :2,54 |
| APFR1 | 0,98 | 1,27 | 7 | 7 | tenue |
| APF2 | 0,84 | 1,07 | 8 | 8 | tenue |
| APFA2 | 1,03 | 1,18 | 7 | 8 | tenue |
| AMFA2 | 0,86 | 1,25 | 8 | 8 | tenue |
| APFC2 | 1,11 | 1,36 | 7 | 8 | tenue |
| AMFC2 | 1,07 | 1,36 | 7 | 8 | CF:défibrage |
| | | | | | CT :2,87 |
| APFR2 | 1,00 | 1,27 | 8 | 8 | tenue |

Les amidons fluidifiés cationiques apportent une excellente densité optique, qu'il s'agisse d'amidon de maïs ou d'amidon de pois, mais ce dernier s'accommode bien de la présence d'un azurant optique.

Sur ce plan de la densité, la comparaison directe amidon de pois - amidon de maïs, après fluidification et acétylation, paraît à l'avantage du premier, d'autant qu'il apparaît, pour le second, des variations sensibles entre côté toile et côté feutre.

Les aptitudes à l'impression par jet d'encre sont tout à fait comparables.

## Revendications

1. Utilisation d'un amidon, issu de légumineuses, ayant subi au moins une transformation visant essentiellement la réduction de la masse moléculaire par hydrolyse acide, alcaline et/ou enzymatique, voire par oxydation ou thermo-oxydation, ledit amidon présentant :
- une richesse en amidon supérieure à 95% (sec/sec),
- une teneur, en matières colloïdales et en résidus fibreux, inférieure à 1% (sec/sec),
- une teneur en protéines inférieure à 1% (sec/sec), et
- une richesse en amylose comprise entre 30 et 60%,
pour l'ennoblissement d'un papier ou d'un carton plat par surfaçage, surfaçage pigmenté et / ou couchage.

2. Utilisation selon la revendication 1, **caractérisée en ce que** l'amidon issu de légumineuses, a en outre subi au moins un traitement de stabilisation par modification chimique.

3. Utilisation selon l'une quelconque des revendications précédentes **caractérisée en ce que** l'amidon est un amidon de pois.

4. Utilisation selon l'une quelconque des revendications précédentes **caractérisée en ce que** la teneur en protéines est inférieure à 0,5% (sec/sec).

5. Utilisation selon la revendication 4 **caractérisée en ce que** la teneur en protéines est comprise entre 0,1 et 0,35% (sec/sec)

6. Utilisation selon l'une quelconque des revendications 2 à 5 **caractérisée en ce qu'**un traitement de stabilisation par modification chimique est un traitement par oxydation, estérification, éthérification ou réticulation.

7. Utilisation selon l'une quelconque des revendications 3 à 6 **caractérisée en ce que** la richesse en amidon de l'amidon de légumineuses est supérieure à 98% (sec/sec).

8. Utilisation selon l'une quelconque des revendications 1 à 7 **caractérisée en ce que** l'amidon de légumineuses présente une fluidité dans l'eau (WF) comprise entre 70 et 90.

## Claims

1. Use of a legume starch that has undergone at least one processing operation mainly intended to reduce the molecular mass by acidic, alkaline and/or enzymatic hydrolysis, or even by oxidation or thermal oxidation, said starch having:
- a starch content of greater than 95% (dry/dry),
- a colloidal matter and fibrous residue content of less than 1% (dry/dry),
- a protein content of less than 1% (dry/dry), and
- an amylose content of between 30 and 60%,
for finishing paper or flat paperboard, by surface treatment, pigmented surface treatment and/or coating.

2. Use according to claim 1, **characterized in that** the legume starch has further undergone at least one stabilizing treatment by chemical modification.

3. Use according to any one of the preceding claims, **characterized in that** the starch is a pea starch.

4. Use according to any one of the preceding claims, **characterized in that** the protein content is less than 0.5% (dry/dry).

5. Use according to claim 4, **characterized in that** the protein content is between 0.1 and 0.35% (dry/dry).

6. Use according to any one of claims 2 to 5 **characterized in that** the stabilizing treatment by chemical modification is a treatment by oxidation, esterification, etherification or crosslinking.

7. Use according to any one of claims 3 to 6, **characterized in that** the starch content of the legume starch is greater than 98% (dry/dry).

8. Use according to any one of claims 1 to 7, **characterized in that** the legume starch has a water fluidity (WF) comprised between 70 and 90.

## Patentansprüche

1. Verwendung einer aus Leguminosen stammenden Stärke, die mindestens einer Bearbeitung unterzogen worden ist, die im Wesentlichen darauf abzielt, die Molekülmasse durch saure, alkalische und/oder enzymatische Hydrolyse, ja sogar durch Oxidation oder Thermooxidation zu reduzieren, wobei die Stärke aufweist:
- einen Stärkegehalt von größer als 95% (trocken/trocken),
- einen Gehalt an kolloidalen Materialien und an Faserresten von kleiner als 1% (trocken/trocken),
- einen Proteingehalt von kleiner als 1% (trocken/trocken), und
- einen Amylosegehalt zwischen 30 und 60%,
zur Veredelung eines Papiers oder eines flachen Kartons durch Oberflächenbehandlung, Pigment-Oberflächenbehandlung und/oder Beschichtung.

2. Verwendung gemäß Anspruch 1, **dadurch gekennzeichnet, dass** die aus Leguminosen stammende Stärke weiterhin mindestens einer Behandlung zur Stabilisation durch chemische Modifikation unterzogen worden ist.

3. Verwendung gemäß einem der vorhergehenden Ansprüche, **dadurch gekennzeichnet, dass** die Stärke eine Erbsenstärke ist.

4. Verwendung gemäß einem der vorhergehenden Ansprüche, **dadurch gekennzeichnet, dass** der Proteingehalt kleiner als 0,5% (trocken/trocken) ist.

5. Verwendung gemäß Anspruch 4, **dadurch gekennzeichnet, dass** der Proteingehalt zwischen 0,1 und 0,35% (trocken/trocken) ist.

6. Verwendung gemäß einem der Ansprüche 2 bis 5, **dadurch gekennzeichnet, dass** eine Behandlung zur Stabilisation durch chemische Modifikation eine Behandlung durch Oxidation, Veresterung, Veretherung oder Vernetzung ist.

7. Verwendung gemäß einem der Ansprüche 3 bis 6, **dadurch gekennzeichnet, dass** der Stärkegehalt der aus Leguminosen stammenden Stärke größer als 98% (trocken/trocken) ist.

8. Verwendung gemäß einem der Ansprüche 1 bis 7, **dadurch gekennzeichnet, dass** die aus Leguminosen stammende Stärke eine Fluidität in Wasser (WF) zwischen 70 und 90 aufweist.
